# EUROPEAN PATENT APPLICATION

(11) **EP 1 062 856 A1**
(43) Date of publication of application: **27.12.2000**
(21) Application number: 00401817.2
(22) Date of filing: 26.06.2000
(51) Int. Cl.: A01D 23/06

(54) **Device for spreading onto the soil the production of a machine for husking root plants such as beets**

(30) Priority: 25.06.1999 FR 9908132
(71) Applicant: ETABLISSEMENTS JEAN MOREAU, 59159 Marcoing (FR)
(72) Inventor: Jette, Etienne Hubert Jean-Marie, 59159 Marcoing (FR)
(74) Representative: Aron, Georges

(57) **Abrégé**

L'effeuilleuse est mobile sur le sol pour arracher et broyer les feuilles de plantes dont on récolte ensuite la racine. L'appareil comprend a) un carter (11,12,13) sensiblement cylindrique comportant une entrée axiale (11) alimentée par ladite production et une goulotte de sortie (14) sensiblement tangentielle et b) des moyens (15,17ᵢ) mobiles en rotation dans ledit carter (11,12,13) pour centrifuger la production reçue de l'effeuilleuse vers le sol, dans une direction prédéterminée, à travers la goulotte de sortie (14).

## Description

La présente invention est relative à un appareil pour éparpiller sur le sol la production d'une effeuilleuse de plantes à racines, telles que des betteraves, l'effeuilleuse étant mobile sur le sol pour arracher et broyer lesdites feuilles et la production de l'effeuilleuse étant évacuée latéralement par rapport à la direction de déplacement de celle-ci.

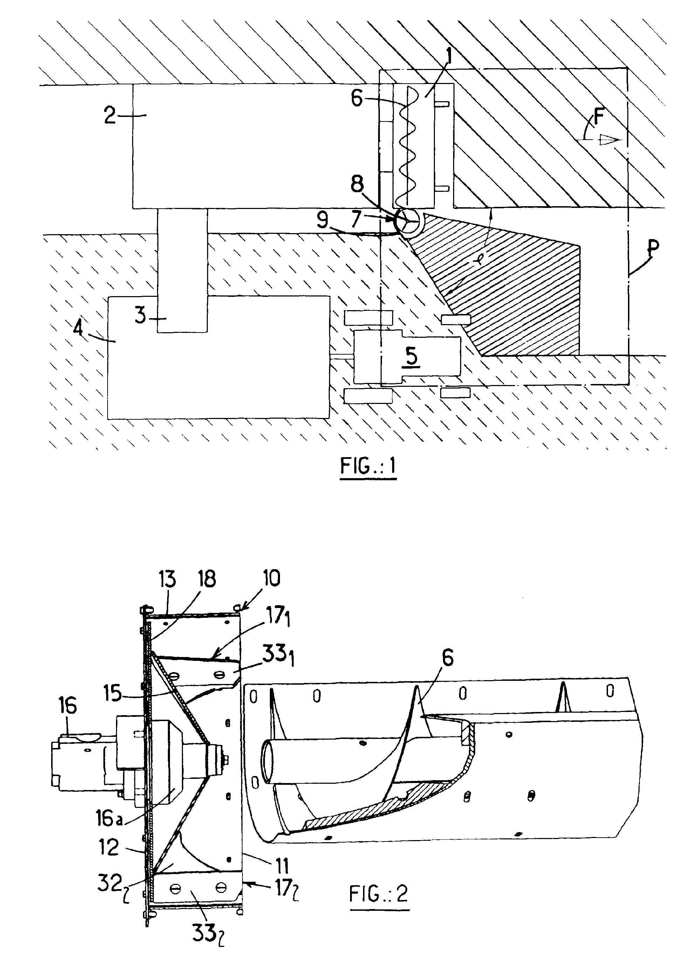

On a représenté à la figure 1 du dessin annexé un ensemble de machines conçues pour coopérer lors de la récolte de plantes à racines telles que des betteraves à sucre, par exemple. Sur la vue schématique en plan de cette figure 1, on retrouve ainsi, de manière connue, une effeuilleuse 1 placée à l'avant d'un engin de récolte 2, suivant le sens d'avancement de cet ensemble sur un sol cultivé repéré par la flèche F, l'engin de récolte 2 procédant par remuage du sol et arrachage des racines à récolter.

L'effeuilleuse 1 est couramment munie d'un ensemble de coûteaux montés sur un arbre entraîné en rotation de manière à débarrasser les plantes à récolter de leur feuillage, par arrachage et broyage de ce feuillage. Cette opération facilite le fonctionnement de l'engin de récolte 2. Les racines récoltées par l'engin 2 sont déchargées à l'aide d'un convoyeur 3 dans une benne 4 tirée par un tracteur 5 pour suivre l'engin 2 dans son déplacement.

Le broyat de feuilles qui constitue la production de l'effeuilleuse, couramment appelé "verts" dans la culture de la betterave, est évacué latéralement par un convoyeur 6, du type à vis d'Archimède par exemple, pour être repris par un appareil 7 conçu pour éparpiller ce broyat sur la partie de la surface du sol où la récolte est déjà faite. On comprend que le broyat ainsi répandu sert d'engrais pour la prochaine récolte. L'épandage du broyat doit alors être uniforme pour assurer une croissance uniforme des plantes et pour éviter des maladies constatées dans le cas contraire, telles que la "mouche du blé" par exemple.

Suivant une disposition connue pour éparpiller le broyat, l'appareil 7 est constitué d'un plateau circulaire horizontal muni de pales et tournant autour d'un axe vertical 8, le plateau étant disposé en dessous du niveau de sortie du broyat de manière que celui-ci tombe sur le plateau. Ce plateau est entraîné en rotation par un moteur autour de l'axe 8 pour centrifuger et éparpiller le broyat reçu sur le sol, le broyat s'épanouissant à la sortie du plateau à l'intérieur d'un angle α défini par un déflecteur 9 pour tangenter l'avant du tracteur 5 progressant sur ce sol.

L'appareil d'éparpillage 3 décrit ci-dessus présente quelques inconvénients. D'une part, les pales qu'il porte sont de hauteur limitée par le fait que le broyat sortant de l'effeuilleuse doit pouvoir tomber sur le plateau pour être éparpiller. Il en résulte que son rendement mécanique est faible car seule une partie de ce broyat peut être reprise par ces pales pour être correctement éparpillée, avec pour conséquence un défaut d'uniformité dans l'étalement du broyat.

D'autre part, l'angle α défini par le déflecteur 9 doit être important pour 1) permettre aux "verts" de sortir rapidement de l'effeuilleuse et couvrir ainsi la largeur de la bande de sol balayée par l'engin de récolte 2 lors de son passage précédent sur la parcelle à récolter et 2) éviter aux "verts" d'être projetés trop en avant, et donc sur l'effeuilleuse elle-même. Du fait de cet angle important, le broyat projeté sur le sol tangente le tracteur 5, ce qui peut provoquer, notamment par temps venteux, des projections de broyat et de cailloux sur le tracteur, dangereuses pour le pare-brise de celui-ci, en particulier.

La présente invention a précisément pour but de réaliser un appareil pour éparpiller sur le sol la production d'une effeuilleuse de plantes à racines, qui ne présente pas les inconvénients mentionnés ci-dessus.

On atteint ce but de l'invention, ainsi que d'autres qui apparaîtront à la lecture de la description qui va suivre, avec un appareil du type décrit en préambule de la présente description, remarquable en ce qu'il comprend a) un carter sensiblement cylindrique comportant une entrée axiale alimentée par la production de l'effeuilleuse et une goulotte de sortie sensiblement tangentielle et b) des moyens mobiles en rotation dans ledit carter pour centrifuger la production reçue de l'effeuilleuse vers le sol, dans une direction prédéterminée, à travers la goulotte de sortie du carter.

Comme on le verra plus loin en détail, l'appareil suivant l'invention présente un rendement mécanique élevé et procure une sécurité accrue du véhicule et de son utilisateur, grâce à un confinement serré des "verts", de leur sortie de l'effeuilleuse à leur éparpillage sur le sol.

Suivant un mode de réalisation préféré de l'invention, lesdits moyens mobiles en rotation comprennent une jupe de révolution centrée sur l'axe du carter, des pales solidaires de ladite jupe et un moteur pour entraîner ladite jupe et lesdites pales en rotation autour dudit axe. La jupe est de forme conique, cette forme étant pointée vers l'entrée du carter.

D'autres caractéristiques et avantages de la présente invention apparaîtront à la lecture de la description qui va suivre et à l'examen du dessin annexé dans lequel :
- la figure 1 est un schéma d'un ensemble de machines de la technique antérieure, conçu pour la récolte de plantes à racines, ensemble décrit en préambule de la présente description,
- la figure 2 est une vue en coupe axiale de l'appareil suivant l'invention, installé sur une effeuilleuse,
- la figure 3 est une vue en perspective de l'appareil de la figure 2, et
- la figure 4 est une schéma de la partie P de l'ensemble de machines de la figure 1, perfectionné par le remplacement de l'appareil 7 d'éparpillage de cet ensemble par l'appareil suivant l'invention.

On se réfère à la figure 2 du dessin annexé où l'appareil éparpilleur 10 suivant l'invention est représenté vu en coupe par un plan passant par l'axe du convoyeur 6 à vis d'Archimède, dans la position qu'il occupe dans un ensemble tel que celui représenté à la figure 1. Selon l'invention, cet appareil est disposé en face de la sortie du convoyeur 6 représenté à cette figure pour recueillir la production de l'effeuilleuse 1 en lieu et place de l'appareil 7 à plateau rotatif représenté à la figure 1.

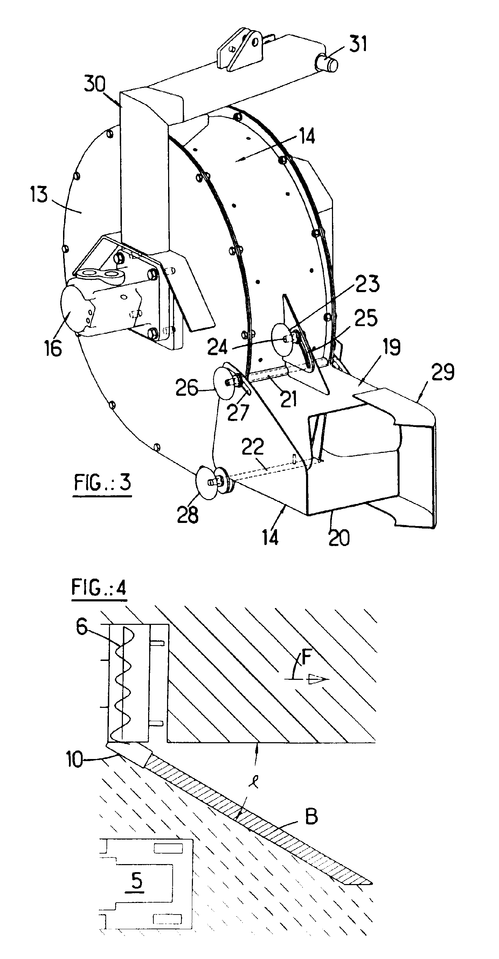

Comme cela apparaît à l'examen des figures 2 et 3, l'appareil 10 comprend un carter sensiblement cylindrique percé d'une ouverture d'entrée 11 centrée sur l'axe de la vis d'Archimède constituant le convoyeur 6 de l'effeuilleuse 1. Ce carter comprend en outre une paroi d'extrémité 12 sensiblement circulaire faisant face à celle qui est percée de l'ouverture 11 et une paroi périphérique 13. Celle-ci s'interrompt au niveau d'une goulotte de sortie 14 sensiblement tangentielle (figure 3) pour ouvrir un passage entre le volume intérieur au carter 11,12,13 et l'extérieur de ce carter.

L'appareil 10 comprend en outre une jupe 15 montée à l'intérieur du carter 11,12,13 sur l'axe d'un moteur 16 agencé pour l'entraîner en rotation autour de cet axe, sensiblement coaxial à la vis d'Archimède du convoyeur 6.

La jupe présente avantageusement la forme d'une surface de révolution, plus précisément conique, selon un mode de réalisation préféré, et pointée vers l'entrée 11 du carter, comme représenté à la figure 2.

Plusieurs pales 17₁,17₂, ... sont fixées sur une plaque circulaire 18 supportant la grande base de la jupe 15, de manière à tourner avec la jupe autour de son axe. Ces pales peuvent être au nombre de trois, disposées avec un pas de 120°. Elles sont montées de manière à passer au voisinage de la paroi périphérique 13 du carter pour y exercer une action de raclage, comme on le verra plus loin.

Le moteur 16 d'entraînement en rotation de la jupe 15 et des pales 17ᵢ est avantageusement un moteur hydraulique, animé par le circuit de liquide hydraulique sous pression qui équipe couramment les machines agricoles. Une partie 16a du moteur peut être avantageusement logée dans la conicité de la jupe 15, pour être abritée à l'intérieur du carter.

La goulotte de sortie 14 du carter 11,12,13 est équipée de divers moyens permettant de faire varier sa géométrie et/ou son orientation. Comme représenté à la figure 3, ces moyens peuvent comprendre, à titre d'exemple illustratif et non limitatif seulement, des déflecteurs 19 et 20, supérieur et inférieur respectivement, articulés sur le carter autour d'axes 21 et 22 respectivement, sensiblement horizontaux.

La position angulaire du déflecteur 19 peut être fixée à l'aide d'un bouton de blocage 23 monté sur un axe 24 solidaire du déflecteur et passant dans une boutonnière 25 solidaire du carter de l'appareil.

De même, la position angulaire du déflecteur 20 autour de l'axe 22 peut être fixée à l'aide d'un bouton de blocage 26 monté sur l'axe 21 qui traverse une boutonnière 27 formée dans une joue de ce déflecteur. Un troisième bouton de blocage 28 monté sur une extrémité de l'axe 22, permet de consolider la fixation du déflecteur 20 dans une position particulière choisie.

Un déflecteur angulaire 29, agissant dans une direction horizontale, complète la goulotte de sortie. Des moyens de réglage (non représentés) de la position de ce déflecteur peuvent être prévus.

Sur la figure 3, il apparaît encore que l'appareil comprend en outre un bras coudé 30 mobile autour d'un axe 31 solidaire de l'effeuilleuse. Grâce à ce bras, l'appareil peut occuper la position de service représentée à la figure 3, centrée sur l'axe de la vis du convoyeur 6 de l'effeuilleuse, ou une position de repos, relevée au-dessus de l'effeuilleuse pour en diminuer l'encombrement en largeur, notamment pour la circulation sur route de l'effeuilleuse.

L'appareil décrit ci-dessus fonctionne alors comme suit. Disposé dans sa position de service (voir figures 2 et 3), il recueille le broyat de feuilles dégagé latéralement par le convoyeur à vis 6. Ce broyat est alors repris par la jupe conique 15 mise en rotation à grande vitesse (de l'ordre de 500 à 1000 tr/mn) par le moteur 16. Le broyat est alors défléchi vers la paroi périphérique du carter par la jupe conique et par l'effet de la force centrifuge qui lui est communiquée. Il est alors repris par les pales 17ᵢ qui exercent sur la paroi périphérique interne du carter une action de raclage et qui propulsent le broyat à grande vitesse à travers la goulotte de sortie 14 du carter, d'où il s'échappe tangentiellement, suivant un axe de direction prédéterminée légèrement inclinée vers le sol, l'axe étant proche de celui-ci.

Comme représenté schématiquement sur la figure 4, le courant de broyat de feuilles qui sort de l'appareil 10 s'étale alors suivant une bande étroite B dont on peut prédéterminer la longueur et la direction (d'angle α) avec précision en agissant sur les les déflecteurs 19,20 et 29 de la goulotte de sortie 14 de l'appareil. Il est alors possible de recouvrir la partie du sol où la récolte est faite avec ce broyat, en évitant que le broyat ainsi éparpillé sur le sol, ainsi que les cailloux qui lui sont éventuellement incorporés, ne percutent le tracteur 5 qui tire la benne 4 recueillant la récolte de l'engin 2 (voir figure 1).

On choisira de préférence, pour constituer la jupe 15 et la paroi périphérique 13 du carter, un acier inoxydable pour faciliter les opérations de nettoyage de ce carter.

Les pales 17ᵢ peuvent être constituées de préférence d'une partie rigide 32ᵢ (telle que 32₂ pour la pale 17₂ de la figure 2) fixée sur la base 18 et d'une partie souple d'embout 33, (telle que 33₁ et 33₂ pour les pales 17₁ et 17₂ de la figure 2) réalisée en un matériau souple tel qu'un élastomère, un polyuréthanne par exemple, lui permettant d'encaisser sans dommages les chocs des cailloux ou autres corps durs ramassés sur le sol par l'effeuilleuse. La partie souple 33ᵢ est fixée par boulonnage sur la partie rigide 32ᵢ.

L'appareil suivant l'invention présente un rendement mécanique élevé, contrairement au plateau rotatif de la technique antérieure décrit en liaison avec la figure 1. Il assure un confinement précis du broyat de feuilles et un éparpillage d'épaisseur régulière de ce broyat sur le sol, favorable à une croissance uniforme de la prochaine récolte et à la suppression de la "mouche du blé". Ce confinement précis assure la sécurité du tracteur 5 et de son conducteur en évitant que ceux-ci ne reçoivent des projections du broyat et/ou de cailloux. On protège ainsi, notamment, le pare-brise du tracteur 5 de risque de casse.

L'utilisation d'un moteur hydraulique équipé d'un variateur de vitesse permet d'adapter la largeur de la bande de sol recevant le broyat à diverses conditions de récolte.

On notera encore que la goulotte de sortie 14 peut être placée très près du sol, ce qui réduit l'effet perturbateur du vent sur la dispersion du broyat de feuilles.

Enfin, le bras 30 de relevage de l'appareil permet de réduire l'encombrement en largeur de l'effeuilleuse équipée de cet appareil, ce qui est favorable notamment lors des déplacements de l'effeuilleuse sur route.

Bien entendu, l'invention n'est pas limitée au mode de réalisation décrit et représenté qui n'a été donné qu'à titre d'exemple. C'est ainsi que l'appareil suivant l'invention pourrait être adapté sans difficulté à une effeuilleuse de plantes à racines autres que des betteraves, telles que endives, chicorées, pommes de terre.

## Revendications

1. Appareil pour éparpiller sur le sol la production d'une effeuilleuse (1) de plantes à racines, telles que des betteraves, avant la récolte de celles-ci, ladite effeuilleuse (1) étant mobile sur ledit sol pour arracher et broyer lesdites feuilles, la production de l'effeuilleuse étant évacuée latéralement par rapport à la direction de déplacement de celle-ci, comprenant a) un carter (11,12,13) sensiblement cylindrique comportant une entrée axiale (11) alimentée par ladite production et une goulotte de sortie (14) sensiblement tangentielle et b) des moyens (15,17ᵢ) mobiles en rotation dans ledit carter (11,12,13) pour centrifuger la production reçue de l'effeuilleuse vers le sol, dans une direction prédéterminée, à travers la goulotte de sortie (14), caractérisé en ce que lesdits moyens comprennent une jupe (15) de révolution centrée sur l'axe du carter (11,12,13), des pales (17ᵢ) solidaires de ladite jupe et un moteur (16) pour entraîner ladite jupe (15) et lesdites pales (17ᵢ) en rotation autour dudit axe.

2. Appareil conforme à la revendication 1, caractérisé en ce que ladite jupe (15) est de forme conique, ladite forme étant pointée vers l'entrée (11) du carter (11,12,13).

3. Appareil conforme à l'une quelconque des revendications 1 et 2, caractérisé en ce que lesdites pales (17ᵢ) sont fixées au voisinage de la périphérie de la base de ladite jupe conique (15), pour racler la partie de ladite production collée sur la paroi interne adjacente du carter (11,12,13).

4. Appareil conforme à l'une quelconque des revendications 1 à 3, caractérisé en ce que lesdites pales (17,) comportent au moins une partie d'embout (33₁,33₂) réalisée en un matériau souple.

5. Appareil conforme à l'une quelconque des revendications 1 à 4, caractérisé en ce que ladite goulotte (14) est équipée de moyens (19 à 29) pour faire varier sa géométrie et/ou son orientation.

6. Appareil conforme à l'une quelconque des revendications 1 à 5, caractérisé en ce que ledit moteur (16) est au moins partiellement logé dans le carter (11,12,13), à l'intérieur de ladite jupe conique (15).

7. Appareil conforme à la revendication 6, caractérisé en ce que ledit moteur (16) est un moteur hydraulique.

8. Appareil conforme à l'une quelconque des revendications 1 à 7, caractérisé en ce qu'il comprend un bras mobile (30) de montage sur l'effeuilleuse (1), pour passer d'une position active, en ligne avec la sortie de la production de ladite effeuilleuse (1), à une position inactive où il est relevé au-dessus de celle-ci.

9. Effeuilleuse de végétaux à racines équipée de l'appareil conforme à l'une quelconque des revendications 1 à 8.
